# EUROPEAN PATENT APPLICATION

(11) **EP 0 581 296 A2**
(43) Date of publication of application: **02.02.1994**
(21) Application number: 93112208.9
(22) Date of filing: 30.07.1993
(51) Int. Cl.: H01B 1/12, H01M 6/18

(54) **Ionically conductive organosiloxane polymer compositions**

(30) Priority: 30.07.1992 JP 223252/92; 28.08.1992 JP 254209/92
(71) Applicant: Dow Corning Toray Silicone Co., Ltd., Chuo-ku, Tokyo (JP)
(72) Inventor: Kobayashi, Akihiko, Main Office R&D., Dow Corning, Ichihara-shi, Chiba Prefecture (JP); Nakamura, Takanashi, Main Office R&D., Dow Corning, Ichihara-shi, Chiba Prefecture (JP)
(74) Representative: Sternagel, Hans-Günther, Dr.

(57) **Abstract**

The ionically conductive compositions of this invention comprise the ionic pair (-SO₃)ₙMⁿ⁺ bonded either to a crosslinked polymer containing organosiloxane units or to a finely divided solid that is immobilized within said composition, where the sulfur atom of said ionic pair is bonded by means of a divalent hydrocarbon radical that optionally contains at least one ether (-O-) linkage, and where M is a metal from Group I or Group II of the periodic table of the elements and n represents the valence of M. If the polymer does not contain oxyalkylene units the composition contains a non-aqueous electrolyte.

## Description

### BACKGROUND OF THE INVENTION

The present invention relates to ionically conductive materials. More particularly, this invention relates to solid ionically conductive compositions comprising a crosslinked organosiloxane polymer and a metal sulfonate group that is either bonded to at least a portion of the silicon atoms of laid polymer through a divalent hydrocarbon radical or is bonded to a finely divided solid that is immobilized within said composition.

Batteries and electron devices such as display elements have recently undergone substantial advances with regard to performance, miniaturization, and thickness reduction. In association with this, the ionically conductive materials used in these applications have been required to exhibit ever higher performance levels and to satisfy such critical demands as solidity, high reliability, high flexibility, high moldability, and moisture resistance.

A recent example of such ionically conductive materials are the solid electrolytes prepared by dissolving or dispersing the salt of a Group I or Group II metal in a polymeric resin matrix. A particularly desirable type of solid electrolyte contains organopolysiloxane and polyethylene oxide (PEO) chains, and much effort has recently been directed toward the synthesis of this type of solid electrolyte.

The presence of the organopolysiloxane chain has the effect of activating the molecular mobility of the PEO chain and is therefore extremely effective in improving ionic conductivity. To date there have been many proposals with regard to ionically conductive materials based on crosslinked polyorganosiloxane/PEO materials, but because these employ dispersed metal salts they have involved the simultaneous transfer of both negative and positive (metal) ions ionically conductive materials of this type are described in Japanese Laid Open Patent Application (Kokai) Sho 62-209169 [209,169/1987]).

The transfer of negative ions is typically associated with a number of problems. For example, when the ionically conductive material is inserted as electrolyte in a device such as a battery, etc., polarization occurs within the electrolyte due to negative ion transfer, and this causes an increase in internal resistance with the passage of time. As a result, steady-state current flow by the metal ion does not occur.

Because charge compensation with the positive ion prevents elimination of the negative ion, it becomes necessary to reduce the negative ion's mobility as much as possible, i.e., a solid ionically conductive material is required that is solely positive ion conductive (hereinafter referred to as a positive ion-monoconductive solid ionically conductive material).

In the particular case of lithium batteries, it has been reported that lithium dendrites tend to grow from the lithium metal anode during repeated charge/discharge cycles with a resulting short-circuiting of the battery. If a positive ion-monoconductive ionically conductive material (particularly in solid form) were to be used as electrolyte in this case, the negative ion distribution would be an essentially constant and uniform dispersion despite the charge/discharge process. Localization of the lithium ion conductive path would be eliminated and dendrite growth could be substantially inhibited.

The fabrication of positive ion-monoconductive ionically conductive materials has been attempted. For example, Lecture Number 2XIIC08 from the 1988 Annual Spring Meeting of the Chemical Society of Japan describes a lithium ion-monoconductive ionically conductive thin film fabricated by the plasma polymerisation of octamethylcyclotetrasiloxane and methyl benzenesulfonate, compounding the film with PEO, and finally immobilization of the sulfonate ion by treatment with lithium iodide. However, a 100% retention of monomer structure is extremely difficult in plasma polymerization, with the result that a completely lithium ion-monoconductive ionically conductive material is not obtained. In addition, the use of plasma polymerization places limitations on the range of application.

In the same manner, all of the heretofore proposed solid electrolytes based on polyorganosiloxanes crosslinked with another polymeric material present problems with their properties or method of fabrication and remain unsatisfactory for application in the electron devices listed above.

The present inventors carried out extensive research in older to solve the problems described in the preceding paragraphs. As a result, they discovered that material obtained by the dispersing particular metal ions in a special crosslinked macromolecular copolymer is free of the problems described above and has an excellent ionic conductivity and, moreover, can be made into a positive ion-monoconductive ionically conductive material.

An objective of the present invention is to provide ionically conductive materials having a high ionic conductivity at room temperature. The materials are highly qualified for use as the solid electrolyte in batteries and electronic devices such as display elements.

### DETAILED DESCRIPTION OF THE INVENTION

The present invention provides a solid ionically conductive material comprising a crosslinked polymer selected from the group consisting of polyorganosiloxanes and organosiloxane/oxyalkylene copolymers, where at least a portion of the silicon atoms of said polymer are bonded to the sulfur atom of a metal sulfonate group

(-SO₃)ₙMⁿ⁺

by means of a hydrocarbylene or oxyalkylene radical, Mⁿ⁺ is a metal ion from Group I or Group II of the Periodic Table, n is 1 or 2 and represents the valence of M, and said composition contains a non-aqueous electrolyte when said crosslinked polymer is a polyorganosiloxane.

The presence of the electrolyte is preferred when the crosslinked polymer contains oxyalkylene units.

In a second embodiment of the present compositions, the anionic portion of the metal sulfonate group is chemically bonded to the surface of a finely divided solid, such as a silica filler, which is immobilized within the solid composition.

The crosslinked polymers of the present invention are polyorganosiloxanes or copolymers containing organosiloxane and oxyalkylene units. When the crosslinked polymer contains only siloxane units the composition also contains a liquid non-aqueous electrolyte described in a subsequent section of this specification.

The siloxane portion of the crosslinked polymer can be derived from reaction of a preformed polyorganosiloxane, particularly a polydiorganosiloxane, containing at least three silanol or hydrolyzable groups per molecule. Alternatively, the siloxane portion can be derived from condensation of a silane containing two or more silanol or silicon-bonded hydrolyzable groups per molecule. The silane typically also contains the anionic portion of the ionic pair bonded to silicon as described in the present specification.

In one embodiment of the present compositions, at least a portion of the siloxane units of the crosslinked polymer are bonded to an ionic pair consisting of sulfonate group and the cationic form of a metal from Group I or Group II of the Periodic Table. The ionic pair can be represented as (-SO₃)ₙMⁿ⁺, where n represents the valence of M and has a value of 1 or 2 and, and M represents a metal from group I or II of the Periodic Table. The ionic pair is bonded a silicon atom of the crosslinked polymer by means of a divalent hydrocarbon radical that optionally contains at least one ether (-O-) linkage. Preferred hydrocarbon radicals are represented by -XOR-, where X is hydrocarbylene or oxyalkylene and R is an unsubstituted or substituted alkylene radical. When the alkylene radical is substituted the substituent is preferably a hydroxyl group.

Suitable hydrocarbylene radicals represented by X include but are not limited to alkylene containing from 1 up to 20 or more carbon atoms, and -CH₂CH₂PhCH₂- , where Ph is phenylene. When X represents an oxyalkylene radical it can be oxyethylene or polyoxyethylene. Suitable alkylene radicals represented by R include but are not limited to methylene, ethylene, propylene, butylene, pentylene, hexylene, heptylene, octylene. Arylene radicals can contain from 6 to 20 carbons, and include but are not limited to phenylene and naphthylene.

Alkoxyalkylene radicals in which X is propylene and R is hydroxypropyl are preferred, based on the availability of the corresponding epoxy-functional silanes that are reacted with a sulfite of a Group I or Group II metal to obtain a precursor of the cross linked polymer that is obtained by reacting the alkoxy or hydroxyl groups bonded to the silicon atom of the silane

The metal ion represented by M in the formula for the ion pair is selected from Group I or Group II of the Periodic Table, and is exemplified by but not limited to lithium, sodium, potassium, magnesium, and calcium.

In a second embodiment of the present compositions the sulfonate portion of the anionic pair is bonded to particles of a filler or other solid additive by means of a hydrocarbylene or oxyalkylene radical that call contain one or more internal ether (-O-) linkages. The particles are subsequently physically or chemically immobilized within the crosslinked polymer network.

No specific restriction apply to the type, form, degree of crosslinking, and other parameters of the crosslinked polymer, so long as this polymer is a solid. It will be sufficient for the siloxane (co)polymer to be crosslinked, and it is not required that all ingredients used to prepare the composition participate in the crosslinking reaction. Crosslinking may be effected by the formation chemical bonds or by physical interactions. The physical interactions can result from intermolecular forces due to crystalline regions with the crosslinked polymer.

As described in the preceding portion of this specification, the electrolyte is optional, but preferred for maximization of ionic conductivity, when the crosslinked polymer contains both siloxane and oxyalkylene units. Examples of suitable electrolytes include but are not limited to low molecular weight polyalkylene oxides such as the polyethylene oxides, alkylene carbonates such as propylene carbonate, and lactones such as gamma-butyrolactone.

In addition to the required ingredients the present compositions can also contain various optional ingredients to impart or enhance various properties such as mechanical properties. Examples of optional additives that may be present included but are not limited to natural and synthetic inorganic and organic fillers such as silica, silicone resin, powdered silicone materials, and cellulose.

As discussed in a preceding section of this specification, the sulfonate portion of the ionic pair that characterizes the present compositions can be chemically bonded to a solid additive such as a filler by reaction with a an organic or organosilicon compound. This compound is sulfonated either prior to or following reaction with the solid additive.

The class of organosilicon compounds referred to in the art as "coupling agents" are particularly suitable for bonding the sulfonate group to the surface of silica fillers.

Because the negative sulfonate portion of the ion pair is bonded through the -X- or -XOR- linkage to the crosslinked polymer or an additive that is immobilized within the crosslinked polymer network, the mobility of this negative ion in the ionically conductive material of the present invention is extremely low. Accordingly, the metal cation is able to dissociate from the anion portion, and ionic conduction occurs by metal ion transfer When the -SO₃ anion is the only species of anion present within the crosslinked macromolecular copolymer, the ionically conductive material can function as a metal ion-monoconductive material.

Preferred methods for fabricating the ionically conductive compositions of the present invention are described below.

Two steps are generally necessary in order to obtain the final crosslinked material: (1) a reaction that introduces the metal sulfonate structure and (2) a crosslinking reaction. So long as the final crosslinked material contains the desired ion pair (-SO₃)ₙMⁿ⁺ , no limitations apply to the sequence of the two steps, and in fact they can be run simultaneously.

In other words, crosslinking of the polymer can be carried out following introduction of the -SO₃)ₙMⁿ⁺ ion pair into a prepolymer or monomer; the (-SO₃)ₙMⁿ⁺ ion pair can be introduced into a previously crosslinked polymer; or the crosslinking reaction can be conducted simultaneously with the reaction that introduces the ion pair into the prepolymer or monomer.

The reactions described in the following procedures are preferred for introducing the ion pair into a polymer.

The epoxy group can be directly bonded to a silicon atom or it can be bonded to silicon by means of an alkylene radical containing from 1 to 20 carbon atoms and/or an arylene radical. The linking hydrocarbylene radical can also include an ether linkage such as -(CH₂)ₘO-, where m is a positive integer.

The sulfonation reaction that introduces the ionic pair into the polymer can be conducted using a silicon-free compound as the initial reactant, followed by reaction of the resultant product with an organosilicone compound.

The metal sulfite used in this and other procedures described in subsequent procedures include but are not limited to lithium sulfite, sodium sulfite, potassium sulfite and calcium sulfite.

The reactions involving metal sulfites can be run with good efficiency using an aqueous dispersion of the reactants at temperatures of from about 60°C to about 80°C. Alternatively, the reactants can be dissolved in polar solvents such as alcohols. The yield of this reaction can be increased by the addition of a metal bisulfite as a buffer.

When the ratio of metal equivalents to epoxy group equivalents is greater then 1, the excess metal ion must be removed by some method at a stage before crosslinking in order for the final crosslinked material to function as a metal ion-monoconductive material.

The chlorine must be bonded to silicon through a C₁ to C₂₀ alkylene radical or through an arylene group with an intervening C₁ to C₅ alkylene radical. Examples of suitable linking groups include but are not limited to propylene and benzylene. The linking radical may also include an ether linkage. The sulfonation reaction may be run on a silicon-free compound followed by bonding to an organosilicon compound. Suitable sulfite compounds and reaction conditions are described in procedure 1. Ultraviolet-induced addition reactions between (A) a compound containing an unsaturated aliphatic hydrocarbon radical or a mercapto group and (B) a compound having the (-SO₃)ₙMⁿ⁺ group at one terminal position and a mercapto group or a unsaturated aliphatic hydrocarbon radical at the other terminal position are described as follows:
The unsaturated aliphatic hydrocarbon radical or mercapto group of the reactant identified as A can be directly bonded to silicon or may be bonded to silicon through a C₁ to C₂₀ alkylene radical and/or an arylene radical. The linking hydrocarbylene radical can contain an intervening ether (-O-) group.

Suitable alkenyl radicals contain from 2 to 20 or more carbon atoms, and include but are not limited to vinyl, allyl, and propenyl. If the reactant A is a silicon-free compound, the sulfonation is followed by a reaction with an organosilicon compound.

It should be understood that the reaction between reactants A and B requires the presence of a mercapto group on one of the reactants and an unsaturated aliphatic hydrocarbon radical on the other. It is not critical which of these two reactive groups is present on reactant A and reactant B,

The addition reaction between the unsaturated aliphatic hydrocarbon radical and the mercapto group in these two reactants occurs upon exposure to high energy radiation as an electron beam, x-rays and ultraviolet radiation. The use of ultraviolet radiation is preferred based on its favorable economics and economics and relative simplicity.

When reactants A and B are very miscible, these can be reacted in the absence of solvent. When they are not miscible, exposure to ultraviolet radiation is preferably conducted after dissolution of the reactants in a polar organic solvent such as tetrahydrofuran, dioxane, acetonitrile, dimethylformamide, and dimethyl sulfoxide.

The reaction runs efficiently in the presence of a photoinitiator, examples of which include but are not limited to acetophenone, benzophenone and trimethylsilylbenzophenone. The photoinitiator should be added within the range of 0.001 to 30 weight parts per 100 weight parts, based on the combined weight of reactants A and B, and is preferably added within the range of 0.05 to 20 weight parts.

While the reaction temperature is not specifically restricted, the reaction is generally run at room temperature or with heating. The ultraviolet source can be any of those known in the art, which include but are not limited to hydrogen discharge tubes, xenon discharge tubes, low-pressure mercury lamps, medium-pressure mercury lamps, and high-pressure mercury lamps. A platinum catalyzed addition reaction between (c) a compound containing an unsaturated aliphatic hydrocarbon radical or SiH group with (D) a compound containing the (-SO₃)ₙMⁿ⁺ group at one terminal position and the SiH group or unsaturated aliphatic hydrocarbon group at the other terminal position is described as follows:
When reactant C contains an unsaturated aliphatic hydrocarbon radical, the unsaturated carbon atoms can be directly bonded to silicon or separated by a C₁ to C₂₀ alkylene and/or arylene radical that can include at least one ether (-O-) linkage. Suitable unsaturated aliphatic hydrocarbon radicals include but are not limited to vinyl, allyl, and propenyl.

Reactant D contains the (-SO₃)ₙMⁿ⁺ group at one terminal position and at least two silicon-bonded hydrogen atoms or unsaturated aliphatic hydrocarbon radicals. The main chain of this reactant is made up of a C₁ to C₂₀ alkylene radical and/or arylene radical. A silicon atom, an ether linkage, or other substituent may be present within these radicals. It will be understood that the number of unsaturated hydrocarbon radicals and/or silicon bonded hydrogen atoms located on each molecule of the reactants should be sufficient to form a crosslinked structure.

The addition reaction between the unsaturated aliphatic hydrocarbon group and SiH in reactants C and D is typically conducted in the presence of any of the known hydrosilylation reaction catalysts. Suitable catalysts include but are not limited to chloroplatinic acid, potassium chloroplatinate, palladium chloride, iridium chloride, iron/carbonyl complexes, ruthenium chloride, nickel chloride, and solid catalysts carrying a supported metal such as platinum and ruthenium.

The reaction between ingredients C and D can be run in the absence of solvent when the two compounds are very miscible. When such is not the case, the reaction is preferably conducted using a solution of the two reactants in a suitable organic solvent.

The concentration of hydrosilation catalyst should be from 0.0001 to 0.1 weight percent, preferably from 0.001 to 0.02 weight percent, based on the combined weight of ingredients C and D.

While the temperature of the hydrosilation is not specifically restricted, this reaction is generally conducted at from room temperature to 150°C. Sulfonation of an aromatic ring not directly bonded to silicon, using concentrated sulfuric acid or fuming sulfuric acid, followed by neutralization with a compound of the desired Group I or Group II metal is described below.

The aromatic ring is exemplified by phenylene and naphthylene and derivatives thereof, in which some of the hydrogen atoms on the aromatic ring have been replaced by organic groups. The aromatic ring-containing compound may be a polymer having a silicon atoms as part of the backbone structure or it may be a non-silicon compound, but in any case the sulfonate must by some method ultimately be reacted to form a pendant group that is part of a silicone polymer.

Formation of a direct bond between the aromatic ring and silicon during preparation of this class of compounds should be avoided because bonds of this nature are cleaved during treatment with concentrated sulfuric acid or fuming sulfuric acid. A C₁ to C₂₀ alkylene radical should be present between the aromatic ring and the silicon atom.

In order to avoid residues of sulfuric acid in the reaction product, the ratio of the moles of sulfur present in the acid to moles of the aromatic ring-containing compound that is reacted with the acid should be about 1:1. When concentrated sulfuric acid (i.e., an aqueous solution of sulfuric acid) is used as the sulfuric acid, the concentration is preferably 96% (equivalent to a saturated solution), but must be at least 80%.

The reaction between the sulfuric acid and the aromatic ring-containing compound is preferably carried out at room temperature or with moderate heating. The reaction may be run without solvent or using a non-aromatic organic solvent.

Following completion of the sulfonation reaction described in the preceding paragraphs, conversion into the metal sulfonate should be run by neutralization with base containing the metal corresponding to the cationic portion of the ionic pair present in the final composition. The anionic portion of the base can be any of the conventional ones, including but not limited to hydroxide and hydrides, and the cationic portion of is a metal from Group I and Group II of the Periodic Table.

It will be necessary to precisely measure the acid number of the sulfonic acid on a preliminary basis and to add the base in an equivalent quantity based on this measurement. The neutralization reaction runs reliably and predictably when conducted in a mixed system of water and polar organic solvent such as tetrahydrofuran, dimethyl sulfoxide or dimethylformamide. Chemically bonding the metal sulfonate group to a filler or other solid additive, then dispersing the resulting additive into an organosiloxane polymer that is subsequently crosslinked is described below.

Fillers on to which the sulfonate group in introduced can be any of the generally known finely divided inorganic and organic fillers, including but not limited to wet-method and dry-method silicas, zeolites, alumina, cellulose, nylon and starch. The surfaces of these fillers carry the usual reactive groups, typically silanol or carbinol.

The metal sulfonate group can be introduced using compounds that react with the groups present on the surface of the filler. Condensation reactions are frequently used for this purpose.

For example, in the case silica, conventional silane coupling agents are bonded by means of a condensation reaction. to the silanol groups present on the surface of this filler. The sulfonate group can introduced into the silane coupling either prior to or following reaction of the coupling agent with the silanol groups on the filler.

Procedures (1) to (5) described in the preceding section of this specification can be used to introduce the metal sulfonate group into the organosilicon compound.

The desired ionically conductive material can be prepared by dispersing the metal sulfonate-containing filler, prepared as described above, in a matrix whose main component is a network composed of organosiloxane and oxyalkylene units. Thus, the filler may first be physically dispersed in a mixture of the starting pre-polymers followed by crosslinking of a portion of the prepolymer.

Too low a concentration of treated filler in the polymer reduces the ionic conductivity of the final composition, while too much filler causes a deterioration in the properties of the final composition. The concentration of filler is preferably from 0.1 to 30 weight percent, based on the weight of the crosslinked polymer matrix.

The reaction used to crosslink the organosiloxane polymer is not restricted. Preferred methods are described in the following paragraphs of this specification. Condensation between a silanol- or alkoxysilyl-functional organosilicon compound and a hydroxyl- or alkoxy-functionalpolyoxynlkylene is described as follows:
Suitable alkoxy groups that can be present on the organosilicon compound and the optional polyoxyalkylene used to prepare the present compositions include but are not limited to methoxy and ethoxy. In order to effect crosslinking the total of the average number of silanol and/or alkoxy groups present on each of the reactants divided by the number of reactants should be greater than 2. These reactive groups can be present either at the terminal or none-terminal positions.

Crosslinking of the final polymer can also be achieved by a preliminary bond formation by some means between the precursors of the organopolysiloxane and the optional polyoxyalkylene and then inducing the condensation of silanol groups or alkoxysilyl groups present at appropriate positions on these reactants.

The condensation reactions used to prepare the crosslinked organosiloxane polymer is conducted by heating the reactants either in the absence of solvent or in a polar organic solvent. Drying by heating in a vacuum is a required final step because it is essential that the evolved water and/or alcohol be completely removed.

Acidic or basic catalysts can be used to accelerate the condensation reaction. When a catalyst is used precautions must be taken to ensure that no catalyst remains in the final product. One way to achieve this is to use a volatile catalyst that is subsequently removed under reduced pressure. Ultraviolet-induced crosslinking when either or both of the two pre-polymers (organopolysiloxane and polyoxyalkylene) contains the chlorobenzyl group is described as follows:
In order to effect crosslinking, at least 3 chlorobenzyl groups must be present in each of the organopolysiloxane and polyoxyalkylene pre-polymers. These groups can be present either at the terminals or as side chains.

Crosslinking may also be achieved by a preliminary bonding by some means between the two pre-polymers followed by a crosslinking reaction involving the chlorobenzyl groups present at appropriate positions. Sulfonation procedure 3 contained in a preceding section of this specification describes the conditions required for the crosslinking reaction, including the appropriate photoinitiators. Ultraviolet-induced crosslinking in the presence of a suitable photoinitiator when one of the two pre-polymers (organopolysiloxane and polyoxyalkylene) contains the mercapto group and the other contains the unsaturated aliphatic group is described as follows:
In order to achieve crosslinking, at least 3 of one type of reactive groups must be present in each molecule of organopolysiloxane and polyoxyalkylene. These may be present either at the terminals or as side chains. Crosslinking can also be achieved by a preliminary bonding by some means between the two pre-polymers (organopolysiloxane and polyoxyalkylene) and then inducing the addition reaction between the mercapto and aliphatically unsaturated groups present at appropriate positions. Sulfonation procedure 3 contained in a preceding section of this specification describes the conditions required for the crosslinking reaction, including the appropriate photoinitiators. Crosslinking in the presence of a suitable hydrosilylation reaction catalyst when one of the two pre-polymers (organopolysiloxane and polyoxyalkylene) contains silicon-bonded hydrogen atoms and the other contains the unsaturated aliphatic hydrocarbon radical is described as follows:
In order to achieve crosslinking, at least 3 of one of the two types of functional groups must be present in each molecule of organopolysiloxane and oxyalkylene polymer. These groups can be present either at the terminal positions or as pendant groups. Crosslinking can also be achieved by a preliminary bonding by some means between the two pre-polymers (organopolysiloxane and polyoxyalkylene) and then conducting the hydrosilation reaction.

Sulfonation method (4) described in a preceding section of this specification provides examples of the unsaturated aliphatic groups and the conditions required for the hydrosilation reaction, including the appropriate catalysts. Crosslinking by heating in a vacuum in the presence of a suitable esterification catalyst when one of the two pre-polymers (organopolysiloxane and polyoxyalkylene) contains the carboxyl group and the other contains the carbinol group is described as follows:
The carboxyl and carbinol groups are each preferably bonded to the prepolymer by means of hydrocarbon radicals, such as C₁ to C₂₀ alkylene and/or arylene radicals. In order to effect crosslinking, at least 3 of the above-mentioned functional groups must be present in the organopolysiloxane and any polyoxyalkylene. These reactive groups can be present either at the terminal positions or as pendant groups. Crosslinking may also be effected by a preliminary bonding by some means between the prepolymer(s), namely the organopolysiloxane and any polyoxyalkylenes and then inducing condensation between the aforesaid functional groups present at appropriate positions.

The condensation reaction is conducted by heating the prepolymer(s) either in the absence of solvent or in a polar organic solvent. Drying by heating under reduced pressure is typically a requirement, because it is essential that the evolved water be completely removed.

Acidic or basic catalysts can be used to accelerate the esterification reaction. When a catalyst is used precautions must be taken to ensure that no catalyst remains in the final product. One way to achieve this is to use a volatile catalyst that is subsequently removed under reduced pressure.

The following examples describe preferred embodiments of the present invention and should not be interpreted as limiting the scope of the invention described in the accompanying claims. Unless otherwise specified all parts and percentages in the examples are by weight and viscosities are the values measured at 25⁰ C.

Ionic conductivity values were obtained using the following method.

The measurement specimen was prepared by forming the ionically conductive material into a film. After specimen thickness had been measured with a micrometer, circular platinum plate electrodes with a diameter of 1 cm were bonded to both surfaces of the specimen. This entire assembly was placed in a thermostatically controlled vacuum container, and the condition of the specimen was completely equilibrated by pumping down to a pressure of less than 10⁻⁵ torr. A 5 Hz to 13 MHz alternating-current voltage was applied using an LCR meter (Yokogawa-Hewlett Packard 4192A), and the conductivity was measured by the complex impedance method.

### Example 1

Ionically conductive materials were fabricated in accordance with the present invention (sample 1) and in accordance with the prior art (sample 2) for the purpose of property comparison.

### Sample 1

10.0 g 3-glycidoxypropyltrimethoxysilane and 3.98 g lithium sulfite were reacted by stirring for 2 hours at 75°C in 14 g pure water. A white precipitate was produced when this reaction product was introduced into 100 mL stirred acetone.
This white precipitate was isolated to yield the compound 1 specified below.

A compound identified compound 2 was prepared using the same procedure with 3-glycidoxypropylmethyldimethoxysilane as the organosilicon compound.

0.1 g compound 1, 0.2 g compound 2, 0.3 g compound 3 as specified below, 0.4 g compound 4a or 4b as specified below, 0.5 g pure water, and 0.5 g tetrahydrofuran were mixed by Stirring to achieve thorough dissolution. This solution was passed through a weakly acidic cation exchange resin in order to remove the excess lithium ion. 2 g of the treated solution was poured into a 3 cm x 3 cm teflon dish. Heating for 2 hours at 120°C on a hot plate followed by vacuum drying for 4 days at 140°C in a vacuum desiccator yielded a transparent film with a thickness of 0.3 mm. Compound 4b does not contain reactive groups that allow it to be incorporated into a crosslinked polymer. In accordance with the present invention, this compound is therefore classified as a non-aqueous electrolyte.

When these film were evaluated by infrared absorption spectroscopy, absorption due to the silanol group was not observed, which confirmed that the condensation reaction had run essentially to completion. The ionic conductivity measured on the films were 2.0 x 10⁻⁶ S.cm⁻¹ at 25°C for the composition prepared using compound 4a and 2.1 x 10⁻⁶ S.cm⁻¹ for the composition prepared using compound 4b.

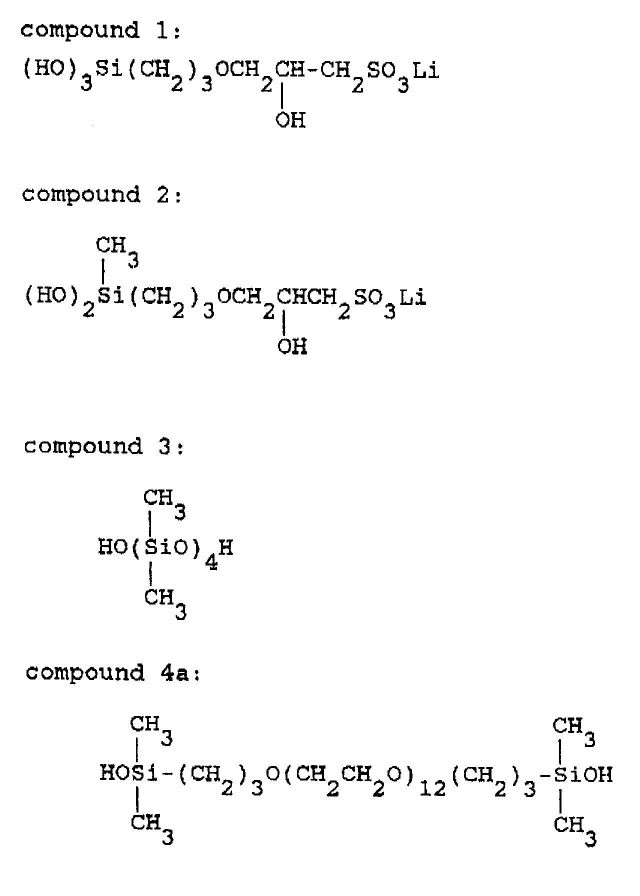

compound 4b: CH₃O(CH₂CH₂O)₁₂CH₃

### Sample 2

0.278 g compound (5) as specified below, 0.527 g compound (6) as specified below, 0.195 g compound (7) as specified below, and 30.8 mg lithium perchlorate were mixed by stirring and thorough dissolution was induced by ultrasound. To the resulting solution was added 3 microliters 0.1 N ethanolic hydrochloric acid. The solution was passed through a weakly acidic cation exchange resin in order to remove the excess lithium ion. 2 g of the treated solution was poured into a 3 cm x 3 cm Teflon(R) dish. Heating for 2 hours at 120°C on a hot plate followed by vacuum drying for 4 days at 140°C in a vacuum desiccator yielded a transparent film with a thickness of 0.3 mm. When this film was evaluated by infrared absorption spectroscopy, no peaks were observed originating with the hydroxyl group or free carboxylic acid and a stretching vibration peak was observed at 1740 cm-1 from the carbonyl group due to ester production. These results confirmed that the esterification reaction had run essentially to completion. The ionic conductivity measured on this film was 4.8 x 10⁻⁵ siemans (S.) cm⁻¹ at 25°C.

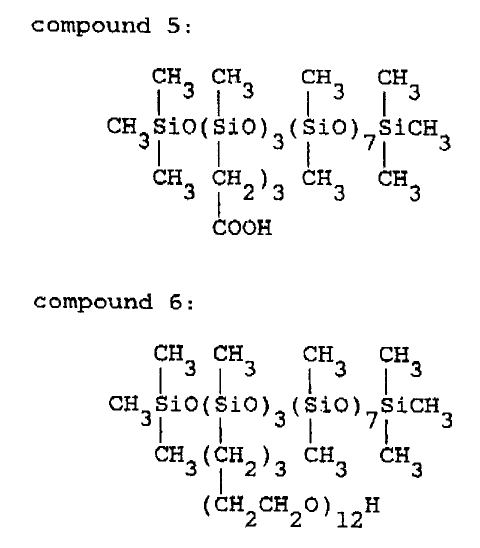

compound 7: HO(CH₂CH₂O)₁₂CH₃

### Direct-current voltage application test

Lithium foil (diameter = 1 cm, thickness = 0.14 mm) was adhered on both surfaces of sample 1 (thickness = 0.3 mm) and sample 2 (thickness = 0.3 mm). The entire assembly was in each case placed in a vacuum chamber. The chamber was evacuated at 25°C to a high vacuum of ≦ 10⁻⁵ torr and the condition of the sample was thoroughly equilibrated. After this conditioning, a direct-current voltage of 1 volt was applied to the two lithium foils and the variation in the current flow over a time period of two days was monitored. With regard to sample 1, the initial current of 52 microamperes was maintained for approximately 2 days, and it was thereby confirmed that this ionically conductive material was a positive ion-monoconductive ionically conductive material. In contrast to this, in the case of sample 2 the initial current of 79 microamperes had declined to 4.4 microamperes after 2 days.

To determine the effect of a non-aqueous electrolyte on the conductivity of the present compositions, the procedure described for the preparation of sample 1 was followed to prepare a crosslinked polymer. The ingredients used were 0.08 g. of compound 1, 0.16 g. compound 2, 0.24 g. of compound 3, 0.32 g. compound 4b, 0.2 g. propylene carbonate, 0.5 g. pure water, and 0.5 g. tetrahydrofuran, and the temperature used to dry the film in the vacuum desiccator was 140⁰ C. The ionic conductivity of the composition was 9.8 x10⁻⁶ S.cm⁻¹ and the direct-current application test produced a current of 250 microamperes for approximately 2 days.

### Example 2

10.0 g 3-glycidoxypropyltrimethoxysilane and 5.33 g sodium sulfite were reacted by stirring for 2 hours at 75°C in 15 g pure water. A white precipitate was produced when this reaction product was introduced into 100 mL stirred acetone. This reaction product was isolated to give the compound 8 specified below. The compound 9 specified below was similarly prepared starting from 3-glycidoxypropylmethyldimethoxysilane.

0.1 g compound 8, 0.2 g compound 9, 0.3 g compound 3 as used in Example 1, 0.4 g compound 4a or 4 b, 0.5 g pure water, and 0.5 g tetrahydrofuran were mixed by stirring to achieve thorough dissolution. This solution was passed through a weakly acidic cation exchange resin in order to remove the excess sodium ion. 2 g of the treated solution was poured into a 3 cm x 3 cm Teflon(R) dish. Heating for 2 hours at 120°C on a hot plate followed by vacuum drying for 4 days at 140°C in a vacuum desiccator yielded a transparent film with a thickness of 0.3 mm.

When this film was evaluated by infrared absorption spectroscopy, absorption due to the silanol group was not observed, which confirmed that the condensation reaction had run essentially to completion. The ionic conductivity measured on the film prepare using compound 4a was 2.8 x 10-6 S.cm-1 at 25°C. The film prepared using compound 4b exhibited a conductivity value of 2.95 S.cm⁻¹ When the direct-current voltage application test described in Example was conducted on the sample prepared using compound 4a, a current of 73 microamperes was maintained for approximately 2 days. The sample prepared using compound 4b maintained a current of 75 microamperes for about 2 days.

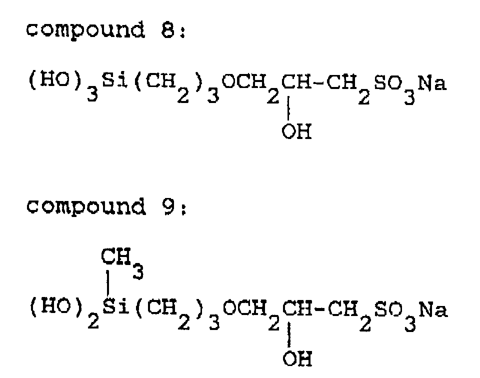

### Example 3

10.0 g 3-glycidoxypropyltrimethoxysilane and 5.08 g calcium sulfite were reacted by stirring for 2 hours at 75°C in 15 g pure water. A white precipitate was produced when this reaction product was introduced into 100 mL stirred acetone. This reaction product was isolated to give the compound (10) specified below. The compound 11 specified below was similarly prepared starting from 3-glycidoxypropylmethyldimethoxysilane.

0.1 g compound 10, 0.2 g compound 11, 0.3 g compound 3 as used in Example 1, 0.4 g compound 4a or 4b, 0.5 g pure water, and 0.5 g tetrahydrofuran were mixed by stirring to achieve thorough dissolution. This solution was passed through a weakly acidic cation exchange resin in order to remove the excess calcium ion. 2 g of the treated solution was poured into a 3 cm x 3 cm Teflon(R) dish. Heating for 2 hours at 120°C on a hot plate followed by vacuum drying for 4 days at 140°C in a vacuum desiccator yielded a transparent film with a thickness of 0.3 mm.

When this film was evaluated by infrared absorption spectroscopy, absorption due to the silanol group was not observed, which confirmed that the condensation reaction had run essentially to completion. The ionic conductivity measured on the films were 8.7 x 10⁻⁷ S. cm⁻¹ at 25°C for the composition prepared using compound 4a and 9.3 S.cm⁻¹ for the composition prepared using compound 4b. The direct-current voltage application test was run as in Example 1, and a current of 23 microamperes was maintained for approximately 2 days for the sample prepared using compound 4a. The film prepared using compound 4b maintained a current of 26 microamperes for about 2 days.

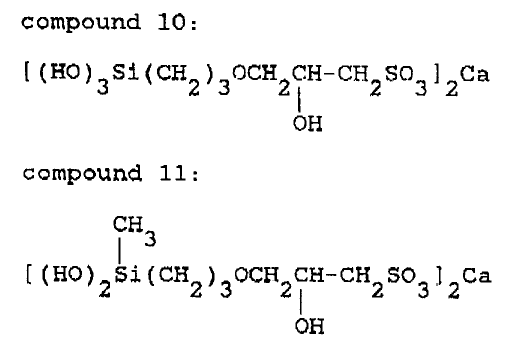

### Example 4

5.00 g compound 12 as specified below and 2.14 g p-chloromethylstyrene were dissolved in 10 mL toluene. This was followed by the addition of 1.6 mg p-methoxyphenol as polymerization inhibitor and 26.0 microliters 2 weight% isopropanolic chloroplatinic acid hexahydrate (H₂PtCl₆.6H₂O) solution as hydrosilylation catalyst and then heating to 70°C and reaction at this temperature for approximately 2 hours. 4.20 g of compound 13 as specified below was subsequently dripped into this solution at 70°C, a reaction, was run at this temperature for approximately 2 hours, and the solvent was then eliminated. 11.3 g of the resulting product and 0.646 g lithium sulfite were reacted by stirring for 2 hours at 75°C in 11 g pure water. A white precipitate was then generated when this reaction product was introduced into 100 mL stirred acetone. This reaction product was isolated to yield compound 14 specified below. The excess lithium ion was removed by passage through a weakly acidic cation exchange resin.

1 g of compound 14 prepared as described above was poured into a 3 cm x 3 cm Teflon(R) dish. A transparent 0.3 mm-thick film warn obtained by exposure to 160 W/cm ultraviolet radiation for 6 seconds from a high-pressure mercury lamp positioned perpendicularly above the film (5 cm gap. After this film had been vacuum-dried for 2 days at 70°C, its ionic conductivity was measured at 1.5 x 10⁻⁶ S.cm⁻¹ (25°C). When it was subjected to direct-current voltage application testing as in Example 1, a current of 39 microamperes was maintained for approximately 2 days.

To determine the effect of including propylene carbonate as an electrolyte, 0.8 g. of compound 14 and 0.2 g. of propylene carbonate were used to form a film as described in the preceding paragraph of this example. The ionic conductivity of this film was 8.3 x 10⁻⁶ S.cm⁻¹ and a current of 220 microamperes was produced for about 2 days during the direct-current voltage application test.

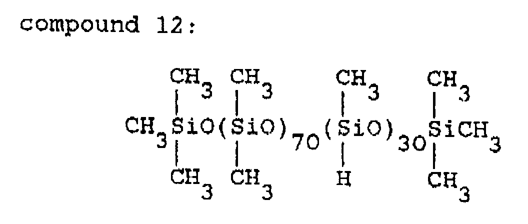

compound 13: CH₂=CH-CH₂O(CH₂CH₂O)₁₂CH₃

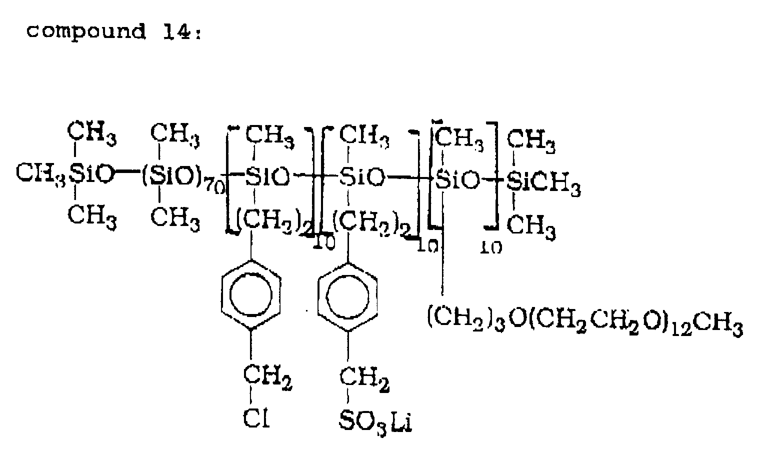

### Example 5

0.634 g compound 15 as specified below, 0.275 g compound 16 as specified below, 0.091 g sodium bisulfite, 0.5 g pure water, and 0.5 g tetrahydrofuran were combined and mixed to homogeneity. After the addition to this solution of approximately 20 mg (4-isopropyl)phenyl-1-hydroxyisopropyl ketone as photoinitiator, the solution was poured into a 3 cm x 3 am teflon dish and heated for 2 hours at 120°C on a hot plate. A transparent 0.3 mm-thick film was obtained by exposure to 160 W/cm ultraviolet radiation for 6 seconds from a high-pressure mercury lamp positioned perpendicularly above the film (5 cm gap). After this film had been vacuum-dried for 2 days at 70°C, its ionic conductivity was 1.8 x 10⁻⁶ S.cm⁻¹ (25°C).

When the film subjected to direct-current voltage application testing as in Example 1, a current of 47 microamperes was maintained for approximately 2 days.

To determine the effect of the presence of propylene carbonate as a non-aqueous electrolyte, the procedures described in the preceding section of this example were repeated using the following amounts of ingredients: 0.507 g. of compound 15, 0.220 g. of compound 16, 0.073 g. of sodium bisulfite, 0.5 g. water, and 0.5 g. of tetrahydrofuran. To the resultant mixture was added 0.2 g. of propylene carbonate and approximately 0.20 mg. of (4-isopropyl)phenyl-1-hydroxyisopropyl ketone as photoinitiator. The crosslinked film formed from this composition exhibited an ionic conductivity of 8.8 x 10-6 S.cm-1 and a current of 230 microamperes for about two days during the direct-current voltage application test.

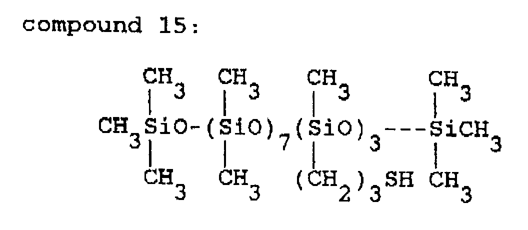

compound 16: CH₂=CH-CH₂O(CH₂CH₂O)₁₂CH₂-CH=CH₂

### Example 6

0.539 g of compound 12 described in Example 4, 0.291 g of compound 16 as described in Example 5, 0.176 g lithium styrenesulfonate, 0.5 g pure water, and 0.5 g tetrahydrofuran were combined and mixed to homogeneity. 2 g of this solution was poured into a 3 cm x 3 cm Teflon(R) dish and heated for 2 hours at 120°C on a hot plate. This was followed by the addition of 2.47 microliters of a 2 weight% isopropanolic chloroplatinic acid hexahydrate (H₂PtCl₆.6H₂O) solution as hydrosilylation catalyst and then heating to 70°C and reaction at this temperature for approximately 2 hours. A 0.3 mm-thick transparent film was obtained. After this film had been vacuum-dried for 2 days at 70°C, its ionic conductivity was measured at 1.6 x 10-6 S.cm-1 (25°C). When it was subjected to direct-current voltage application testing as in Example 1, a current of 42 microamperes was maintained for approximately 2 days.

To determine the effect of including propylene carbonate as an electrolyte, 0.426 g. of compound 12, 0.233 g. of compound 16, 0.141 g. of lithium styrenesulfonate, 0.5 g. water, 0.5 g. tetrahydrofuran, 0.2 g. propylene carbonate were used to form a film as described in the preceding paragraph of this example. A film that had been dried in na vacuum oven for two days at 70⁰ C exhibited an ionic conductivity of 7.9 x 10⁻⁶ S.cm⁻¹ and maintained a current of 210 microamperes for two days during the direct-current voltage application test.

### Example 7

0.3 g of compound 5 described in Example 1, 0.5 g of compound 7 described in Example 2, 0.2 g of compound 1 described in Example 1, 0.5 g pure water, and 0.5 g tetrahydrofuran were mixed to homogeneity. After the addition of 3 microliters 0.1 N ethanolic hydrochloric acid, 2 g of this solution was poured into a 3 cm x 3 cm teflon dish. Heating for 2 hours at 120°C on a hot plate followed by vacuum drying for 4 days at 140°C in a vacuum desiccator yielded a transparent film with a thickness of 0.3 mm. The ionic conductivity of this film was 1.7 x 10⁻⁶ S.cm⁻¹ (25°C). When it was subjected to direct-current voltage application testing as in Example 1, a current of 44 microamperes was maintained for approximately 2 days.

A film containing a non-aqueous electrolyte was prepared following the procedure described in the preceding section of this example using 0.24 g. of compound 5, 0.4 g. of compound 7, 0.16 g. of compound 1, 0.5 g. of water, 0.5 g. of tetrahydrofuran, 0.2 g. of propylene carbonate and 3 microliters 0.1 N ethanolic hydrochloric acid. The ionic conductivity of this film was 9.2 x 10⁻⁶ S.cm⁻¹ and a current of 240 microamperes was maintained for about 2 days during the direct-current voltage application test.

### Example 8

10.0 g of compound 12 described in Example 5 and 2.41 g of styrene were dissolved in 20 mL toluene. After the addition of 3.2 mg p-methoxyphenol as polymerization inhibitor and 49.4 microliters of a 2 weight% isopropanolic chloroplatinic acid hexahydrate (H₂PtCl₆.6H₂O) solution as hydrosilylation catalyst, the temperature of the resultant mixture was raised to 70°C and a reaction was run for approximately 2 hours at this temperature. The solvent was then removed from the reaction solution. 10 g of the resultant polymer was sulfonated by contacting it with 5 g of 96% aqueous sulfuric acid, and the excess sulfuric acid was removed by washing with water. The sulfonic acid value was measured on the resulting oil, which was then neutralized with an equivalent quantity of lithium hydroxide to yield compound 17 described below. 0.709 g of compound 17, 0.291 g of compound 16 described in Example 5, 0.5 g pure water, and 0.5 g tetrahydrofuran were combined and mixed to homogeneity. 2 g of this solution was poured into a 3 cm x 3 cm Teflon(R) dish and heated for 2 hours at 120°C on a hot plate. 2.47 microliters of a 2 weight% isopropanolic chloroplatinic acid hexahydrate (H₂PtCl₆.6H₂O) solution was added as a hydrosilylation catalyst, followed by heating at 70°C for approximately 2 hours. A 0.3 mm-thick transparent film was obtained. After this film had been vacuum-dried for 2 days at 70°C, its ionic conductivity was 1.8 x 10⁻⁶ S.cm⁻¹ (25°C). When it was subjected to direct-current voltage application testing as in Example 1, a current of 47 microamperes was maintained for approximately 2 days.

To determined the effect of the presence of propylene carbonate, a film of crosslinked polymer was prepared as described in the preceding section of this example using the following amounts of ingredients: 0.567 g. of compound 17, 0.233 g. of compound 16, 0.5 g. water, 0.2 g. propylene carbonate, 0.5 g. tetrahydrofuran and 2.47 microliters of a 2 weight percent isopropanolic solution of chloroplatinic acid hexahydrate. The ionic conductivity of the crosslinked film was 8.0 x 10⁻⁶ S.cm⁻¹, and a current of 210 microamperes was maintained for about 2 days during the direct-current voltage application test.

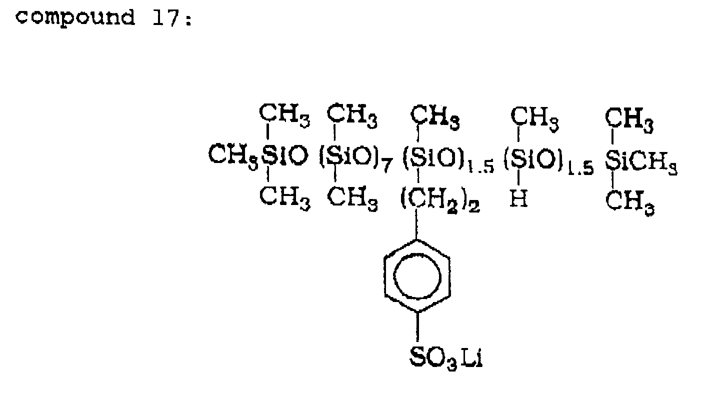

### Example 9

10 g wet-method silica (Nipsil VN3, wet-method silica from Nippon Silica Kogyo Kabushiki Kaisha) was heated for 2 hours at 150°C in order to remove water adsorbed on the surface. This was followed by the addition of 5 g compound 1 described in Example 1 and then heating under reflux for 2 hours in one liter of a 5 N KOH solution in toluene while distilling the evolved water from the system. The silica was isolated and unreacted compound 1 was removed by a water wash. The following ingredients were mixed by stirring with complete homogeneity being obtained by exposure to ultrasound: 0.1 g of the silica prepared as above, 0.250 g of compound 5 described in Example 1, 0.474 g compound 6 described in Example 1, and 0.176 g of compound 7 described in Example 1.

Following the addition of 3 microliters 0.1 N ethanolic hydrochloric acid, heating and drying of the reaction mixture were conducted as described for Sample 1 in Example 1. A 0.3 mm-thick transparent film was obtained. The ionic conductivity of this film was 1.9 x 10⁻⁶ S.cm⁻¹ at 25°C. When the direct-current voltage application test was conducted, a current of 49 microamperes was maintained for approximately 2 days

## Claims

1. A solid ionically conductive material comprising a crosslinked polymer selected from the group consisting of polyorganosiloxanes and organosiloxane/polyoxyalkylene copolymers, where at least a portion of the silicon atoms of said polymer are bonded to the sulfur atom of a metal sulfonate group having the formula
(-SO₃)ₙMⁿ⁺
by means of a hydrocarbylene or oxyalkylene radical, Mⁿ⁺ is a metal ion from Group I or Group II of the Periodic Table, n is 1 or 2 and represents the valence of M, and said composition contains a non-aqueous electrolyte when said crosslinked polymer is a polyorganosiloxane.

2. A composition according to claim 1, where said crosslinked polymer is an organosiloxane/polyoxyalkylene copolymer and said composition further comprises a non-aqueous electrolyte.

3. A composition according to claim 1 where, said metal is selected from the group consisting of lithium, sodium, potassium, calcium and magnesium and said metal sulfonate group is bonded to silicon by means of a group of the formula -X- or -X-O-R-, where X represents a hydrocarbylene or oxyalkylene radical and R represents an unsubstituted or substituted alkylene radical.

4. A composition according to claim 2 where said crosslinked polymer is an organosiloxane/polyoxyalkylene copolymer where said polyoxyalkylene portion is polyokyethylene, and said electrolyte is selected form the group consisting of polyethylene oxides, propylene carbonate, and gamma-butyrolactone.

5. A composition according to claim 4 where the organosiloxane portion of said crosslinked polymer is derived from the condensation of at least one silane containing at least two silanol or silicon-bonded alkoxy groups per molecule.

6. A composition according to claim 4 where the organosiloxane portion of said crosslinked polymer comprises diorganosiloxane units and X is -(CH₂)₂PhCH₂-, where Ph, is p-phenylene.

7. A solid ionically conductive material comprising a crosslinked polymer selected from the group consisting of polyorganosiloxanes and organosiloxane/polyoxyalkylene copolymers, and a finely divided solid immobilized within said composition where the sulfur atom of a metal sulfonate group
(-SO₃)ₙMⁿ⁺
is bonded to the surface of said solid by means of a hydrocarbylene or oxyalkylene radical, Mⁿ⁺ is a metal ion from Group I or Group II of the Periodic Table, n is 1 or 2 and represents the valence of M, and said composition contains a non-aqueous electrolyte when said crosslinked polymer is a polyorganosiloxane.

8. A composition according to claim 7, where said crosslinked polymer is an organosiloxane/polyoxyalkylene copolymer and said composition further comprises a non-aqueous electrolyte.

9. A composition according to claim 10 where the organosiloxane portion of said crosslinked polymer is derived from the condensation of at least one silane containing at least two silanol or silicon-bonded alkoxy groups per molecule.
